Europäisches Patentamt

European Patent Office

Office européen des brevets

(11) Publication number: **0 174 192**
A2

(12) # EUROPEAN PATENT APPLICATION

(21) Application number: 85306286.7

(22) Date of filing: 04.09.85

(51) Int. Cl.⁴: **A 23 J 3/02**

(30) Priority: 05.09.84 JP 187186/84
01.04.85 JP 69625/85

(43) Date of publication of application:
12.03.86 Bulletin 86/11

(84) Designated Contracting States:
DE FR GB NL

(71) Applicant: MINAMINIHION RAKUNO KYODO
KABUSHIKI KAISHA
3 Himegi-cho 32-gaiku
Miyakonozyo-shi Miyazaki-ken(JP)

(72) Inventor: Yagi, Naoki
No. 31-16, Senrioka-Kami
Suita-shi Osaka-fu(JP)

(72) Inventor: Kim, Kwang Young
No. 1-9, Kotobuki-cho, 1-chome
Higashi Osaka-shi Osaka-fu(JP)

(72) Inventor: Nakaji, Tarushige
No. 32, Minami Uematsu-cho 3-chome
Yao-shi Osaka-fu(JP)

(74) Representative: Bizley, Richard Edward et al,
BOULT, WADE & TENNANT 27 Furnival Street
London EC4A 1PQ(GB)

(54) **Process for Preparing heat resistant milk protein having good processability and/or acid - and base-resistance, and a food product containing such protein.**

(57) A process for preparing a milk protein resistent to acids and bases is provided which comprises subjecting an aqueous solution or dispersion containing casein and 0.5 – 30 parts of an acidic polysaccharide per 100 parts of casein at pH of 7.3 – 10.5 and at a temperature of 70°C or higher for 3 mintues or more. In addition by inter alia adjusting the aforesaid conditions a process for preparing a heat resistant milk protein having excellent processability may be provided, which process comprises subjecting an aqueous solution or dispersion containing casein and an acidic polysaccharide at pH of 7.5–10.5 to a temperature of 70°C or higher for 5 minutes or more, forming the resultant material into a desired shape, and soaking in an aqueous solution containing a multivalent metallic compound in an amount of 10mM or more as multivalent metal.

EP 0 174 192 A2

PROCESS FOR PREPARING HEAT RESISTANT MILK PROTEIN
HAVING GOOD PROCESSABILITY AND/OR ACID- AND BASE-
RESISTANCE AND A FOOD PRODUCT CONTAINING SUCH
PROTEIN

The present invention relates to a process for
preparing a heat resistant milk protein having good
processability and/or acid- and base- resistance.
More particularly, it relates to a process for
preparing a milk protein which has enough heat
resistance to prevent the heat softening properties of
caesin (which is a main component of milk protein) as
well as such good processability that it can readily
be made into a desired shape, and hence, is useful as
a raw material for food, and the present invention
also enables the production of a milk protein which is
resistant to acids and bases and is useful as a raw
material for food and as or in a food additive.

Unlike a heat curdling protein such as globulin,
albumin or the like, casein which is a main component
of a milk protein has heat softening properties. Due
of such properties, it is extremely difficult to
produce a food product such as, for example, an
artificial meat product containing casein or milk
protein as a main component thereof and having a
texture which can be subjected to heat cooking because
its texture is liable to be spoiled by heating.

Accordingly, various methods have been heretofore
proposed to modify the heat softening properties of
casein. For example, a method in which milk protein
is formed into fibers and boiled in a salt bath or
treated with a compound having an aldehyde group to
give resistance to heat softening (Schmandk et al, Die

Nahrung, 20, 10, 911 - 914 (1976); or Japanese Patent Publication No. 26381/1981), and a method in which milk protein is formed into fibers and treated with an aqueous phosphate to give resistance to heat softening (Japanese Patent Laid Open Publication Nos. 79048/1977 and 79049/1977) are known. However, resistance to heat softening provided by these methods is not always sufficient, and in any case, milk protein is previously fixed in a predetermined shape such as a fibrous form and then the thus-shaped protein is treated to give resistance to heat softening. Therefore, the protein cannot be finished in a desired optional shape. Further, a method which comprises treating a solution containing casein with a protease, a phosphate and a multivalent metallic compound to gel the solution and then heating the gel to give heat curdling properties has been also known (Japanese Patent Publication No. 32857/1983). However, since this method provides heat curdling properties to the protein by gelation and heating, the protein cannot be finished in a desired optional shape either.

In addition, casein exhibits excellent emulsifying and thickening activities in a system within a neutral pH range or a system containing no salt or containing a salt in a low concentration and, therefore, it is widely employed as a raw material or an additive for food of such systems. However, casein aggregates and precipitates at a pH range of not more than about 4.6 which is the isoelectric point thereof. Further, casein also aggregates in the presence of a large amount of a salt such as e.g. sodium chloride, and salting-out of casein occurs. Accordingly, in a system within an acidic pH range of containing a large amount of a salt, the excellent properties and functions of casein are spoiled and it is very difficult to use casein in food of an acidic pH range or food containing a large amount of a salt.

The present invention is based upon the findings:

(a) when an aqueous solution or dispersion containing casein and an acidic polysaccharide is heated under certain conditions and the resulting heated product is formed into a desired shape and treated with a multivalent metallic compound, the heat softening properties of casein can be readily modified and, in addition, the products can be finished in desired optional shapes; and

(b) by subjecting casein and an acidic polysaccharide to a heat treatment under particular conditions, it is possible to obtain casein which is resistant to both acids and bases and can exhibit the excellent properties and functions thereof even in food of an acidic pH range of food containing a large amount of a salt as well as in food of neutral pH range of food containing no salt or only a small amount of salt.

The "certain conditions" noted above for imparting heat resistance and shape retention are a preferred embodiment of the "particular conditions" noted above in relation to acid-base-resistance.

Thus according to the present invention, there is provided a process for preparing a milk protein resistant to acids and bases which comprises subjecting an aqueous solution or dispersion containing casein and 0.5 - 30 parts by weight (the term "parts" hereinafter means "parts by weight") of an acidic polysaccharide per 100 parts of casein to heat treatment at pH 7.3 to 10.5 and at a temperature of not less than $70^{o}C$ for 3 minutes or more. In the process of the present invention, the thickening activity of the resulting milk protein can be further improved by carrying out the heat treatment in the presence of calcium ion or magnesium ion.

The present invention also permits the provision of a casein having good heat resistance and also enables the preparation of a milk protein which has an excellent processability.

Thus, according to a further aspect of the present invention an aqueous solution or suspension containing casein and 0.5 - 20 parts by weight of an acidic polysaccharide per 100 parts of casein may be subjected to heat treatment at pH 7.5 to 10.5 and at a temperature of not less than 70°C for 5 minutes or more, and the resultant material thereafter formed into a desired shape, and then the thus-shaped material soaked in an aqueous solution containing a multivalent metallic compound in an amount of 10 mM or more as multivalent metal to provide heat resistance to the casein. Furthermore, the material resulting from the above heat treatment can be readily formed into a desired shape and, by soaking it in an aqueous solution containing a multivalent metallic compound to give shape retention, milk protein can be finished in a desired optional shape such as fibers, membranes, spheres and the like.

In order to carry out the process of the present invention, an aqueous solution or dispersion of casein and an acidic polysaccharide is first prepared.

The form of casein used may be, e.g. casein or sodium caseinate. Casein is used by dissolving it with an alkali such as e.g. sodium hydroxide, potassium hydroxide, aqueous ammonia, sodium carbonate, sodium triphosphate, potassium carbonate, calcium hydroxide or magnesium hydroxide when using an alkali such as calcium hydroxide or magnesium hydroxide which is a calcium or magnesium ion source, as described hereinafter, the amount thereof should be 1.4 parts per 100 parts of casein or less to achieve the desired improvement of thickening activity.

Sodium caseinate is used by dissolving it in warm water. The amount of casein used is usually 3% or 5% (% hereinafter means wt%) or more based on the entire aqueous solution or dispersion to be prepared, generally, 3 - 30% is preferred, e.g. 5 - 30%.

When questions of heat resistance and shape retention are paramount, and casein per se is used, the protein is used by dissolving it in an alkaline solution free from a multivalent cation, for example, in an aqueous solution of an alkali such as e.g. sodium hydroxide, potassium hydroxide, aqueous ammonia, sodium carbonate, sodium triphosphate or potassium carbonate. For the above purposes, the amount of casein used is 5% (% hereinafter means wt%) or more based on the entire aqueous solution or dispersion to be prepared, generally, 5 - 30% is preferred. When it is less than 5%, sufficient shape retention cannot be obtained in the subsequent treatment with a multivalent metal which results in difficulty in handling.

The acidic polysaccharide may be, e.g., alginic acid, sodium alginate, alginic acid propylene ester, carrageenin (any one of $\kappa$ , $\lambda$ and $\int$ .) or furcellaran. Other polysaccharides which may be employed in the invention are gum karaya, gum ghatti, gum tragacanth, xanthan gum, methyl cellulose, carboxy methyl cellulose or low-methoxyl pectin. They can be used alone or in a combination thereof.

The acidic polysaccharide is used in the ratio of 0.5 - 30 parts per 100 parts of casein to achieve acid- and base- resistance. When this ratio of the acidic polysaccharide to casein is either too small or too large, the desired resistance to acids and bases is not to be expected.

When heat resistance and shape retention are under consideration, the acidic polysaccharide is used in a ratio of 0.5 - 20 parts per 100 parts of casein. When this ratio of the acidic polysaccharide is either too small or too large, the desired heat resistance is not expected and, particularly, when it is too large, a problem results in that viscosity is too high.

The aqueous solution or dispersion can be prepared by dissolving or dispersing casein and an acidic polysaccharide simultaneously or successively in hot water or the above aqueous alkaline solution according to a conventional manner. Alternatively, it can be prepared by separately dissolving or dispersing casein and an acidic polysaccharide in advance and then mixing them. Optionally, other ingredients, for example, a neutral saccharide such as glucose, sucrose or starch, oils and fats and the like, may be added to this aqueous solution or dispersion.

In any event, after forming the aqueous solution or dispersion this is heated at pH 7.3 - 10.5 and at a temperature of $70^{\circ}C$ or higher for 3 minutes or more. For heat resistance and shape retention heating is at pH 7.5 - 10.5 for 5 minutes or more (also at $70^{\circ}C$ or higher).

When an aqueous alkaline solution is employed to dissolve the casein, adjustment of the pH of the solution or dispersion is not always required. However, when adjustment of pH is required, it is carried out with an alkali (free from multivalent cations when heat resistance and shape retention is paramount).

Although there is no intention to a particular theory, it is believed that, by the heat treatment of the present invention, casein and the acidic polysaccharide form a complex and, thereby, the desired resistance to acids and bases is provided. Provided such cations have hitherto been excluded, a desired change in the configuration of the casein results by subsequent treatment with a multivalent metallic compound providing heat resistance to the casein. In order to form a desired complex, the pH of the heat treatment must be, as described above, in the range from 7.3 to 10.5, e.g. 7.5 to 10.5. It is considered that formation of the desired complex is insufficient when the heat treatment is carried out at a pH of lower than 7.3, and the complex becomes unstable due to breakage of disulfide bonds when the heat treatment is carried out at a pH of higher than 10.5. Therefore, it is necessary to carry out the heat treatment in this pH range and at a temperature of $70^{\circ}C$ or higher for 3 minutes or more. The upper limit of the heating temperature and the heating time are not specifically limited unless there is any adverse effect on the resulting product. In general, however, the heat treatment is preferably carried out at $70 - 130^{\circ}C$ for up to 90 minutes, e.g. 5 to 90 minutes in view of operational and economic efficiency.

In the present invention, when imparting acid- and base- resistance, when the heat treatment is carried out in the presence of calcium ion or magnesium ion, the thickening activity of casein is further improved. For this purpose, it is preferable to add a calcium ion source or a magnesium ion source prior to or during the heat treatment. As the calcium or magnesium ion source, there can be used e.g. calcuim chloride, calcium phosphate, calcium carbonate, calcium sulfate, calcium lactate, calcium hydroxide, magnesium chloride, magnesium sulfate, magnesium citrate and/or magnesium lactate. The calcium or magnesium ion source can be used in a ratio of 0.1 to 1.4 parts per 100 parts of casein calculated as calcium or magnesium ion. When this ratio is too high, the thickening activity is rather spoiled.

After cooling, the solution or dispersion thus- treated per se can be used directly as a milk protein resistant to acids and bases. Alternatively, it can be further subjected to additional processes, such as e.g. concentration or drying, in a conventional manner.

When it is desired to impart heat resistance and shape retention, the resultant material from the aforesaid heat treatment is, directly or after cooling, formed into a desired shape and soaked in an aqueous solution containing a multivalent metal.

The resultant material from the heat treatment can be formed into a desired shape according to any conventional manner, for example, by extruding it from a extruder having a die or nozzle of a corresponding shape into a particular shape such as e.g. a fiber, membrane or sphere. It has been found that, when 0.5 part or more, preferably 1-20 parts, of a polyglycerin fatty acid ester is added to the material resulting from the heat treatment in this step, sticking of the processed material to apparatus used in this step or in the subsequent step is minimized and, thereby, the yield is improved. As the polyglycerin fatty acid ester, the oleate or stearate ester, wherein the average degree of polymerization of glycerin is 5 or more, is preferred.

The multivalent metallic compound may be, e.g., one or more compounds selected from calcium chloride, calcium sulfate, calcium phosphate, calcium carbonate, calcium lactate, calcium hydroxide, magnesium chloride, magnesium sulfate, magnesium citrate, magnesium lactate and magnesium hydroxide. The multivalent metallic compound is used by dissolving it in water at a concentration of 10 mM or more as multivalent metal, generally 70-1500 mM. If the concentration of the multivalent metal is too low, the desired heat resistance and shape retention cannot be obtained.

The shaped product can be soaked in an aqueous solution containing the multivalent metallic compound according to a conventional manner. When the concentration of the multivalent metal is higher, soaking can be performed at room temperature for only a few seconds to provide sufficient heat resistance and shape retention. Even if the concentration is low, soaking at room temperature for 5-30 minutes is sufficient. Furthermore, the soaking solution may be heated, if necessary.

Thus, after soaking, the desired heat resistant milk protein of the present invention, which has excellent processability, can be obtained. The milk protein of the present invention thus-obtained can be used directly as it is, or, after subjecting it to additional processes, to produce a food product such as, for example, an artificial meat product having a texture which can be subjected to e.g. heat cooking.

The results of tests for the effect of the addition of an acidic polysaccharide; and the relation between processing conditions and both heat resistant properties and processability are illustrated hereinafter.

Test 1

Effect of addition of acidic polysaccharide

50 ml Portions of warm water are placed in three 200 ml beakers (A, B and C). 0.5 g of ι-Carrageenin and 0.5 g of locust bean gum were added respectively to the beakers A and B, and stirred to effect solution. Nothing was added to beaker C, as a control. Separately, casein solution was prepared by dispersing 100 g of casein in 400 ml of warm water and then adding 5 ml of 28 % aqueous ammonia to dissolve casein. 50 ml Portions of this casein solution were respectively added to the beakers A, B and C, and the mixtures were thoroughly stirred and then pH's thereof were adjusted to 9.0 with 1N sodium hydroxide. Then, each beaker was heated at 80 °C for 30 minutes after which each solution was added to 10 % aqueous calcium chloride via a 10 ml pipette, and their appearance observed. The results were as follows:

Beaker A: A white fibrous material was obtained, which retained its shape as it was when it was taken out and heated in boiling water.

Beakers B and C: The calcium chloride solution became cloudy, but material having a certain shape was not obtained.

As is seen from the above results, a milk protein having heat resistance and shape retention properties can be obtained by using an acidic polysaccharide.

Test 2

Effect of pH during heat treatment

5 g of κ-Carrageenin was added to 900 ml of warm water, to which was added and dissolved 100 g of sodium casein to prepare a solution containing casein and carrageenin. 100 g Portions of this solution were distributed into six beakers, and pH's were adjusted to 7.0, 7.5, 8.0, 9.0, 10.5 and 11.0, respectively, with sodium hydroxide. Then, each beaker was heated at 80 °C for 30 minutes, and each solution was intermittently added dropwise, in spheres, to 5 % aqueous calcium chloride with a truncated pipette. Then the material thus obtained was taken out, washed with water to remove an excess of calcium ion and thereafter boiled in boiling water for 5 minutes. Change in shape of the resulting material was observed and the texture of the material was estimated. The results are shown in Table 1.

- 12 -

0174192

## Table 1

| pH | Shapes of the materials after 5 min-boiling | Texture |
|---|---|---|
| 7.0 | sphere-shape was immediately deformed, dissolved, a small amount of membrane remained | could not be estimated |
| 7.5 | boiling water was slightly clouded, sphere shapes remained | soft doughy texture |
| 8.0 | no cloudiness, no changes in sphere shapes | very elastic, fish flesh sausage-like texture |
| 9.0 | " | " |
| 10.5 | no cloudiness, no changes in sphere shapes, emitting sulfur odor | having a texture like heat processed white meat of chicken |
| 11.0 | membrane was formed only on the surface, solution remained at the center, strong sulfur odor | extremely hard only at the surface |

As is seen form these results, the heat treatment in the process of the present invention to impart heat resistance and shape retention is carried out at pH 7.5 - 10.5, preferably at pH about 8.0 - 9.0.

## Test 3

### Effect of heating temperature and time

5 g of ι-Carrageenin was added to and dissolved in 900 ml of warm water and to which was added 100 g of sodium caseinate to effect a solution containing casein and carrageenin. The pH of the solution was adjusted to 8.5 with sodium hydroxide and then it was divided into 50 g portions and heated at 60°, 70°, 90° and 121°C, for 3, 5, 15, 30 and 60 minutes, respectively. Each solution was injected continuously to 5 % calcium chloride with a pipette to form it into string and allowed to stand for 15 minutes.

After 15 minutes, the material thus-formed was taken out, washed, boiled in boiling water for 5 minutes and the shape and texture estimated according to the following criteria:

x: The boiling water became cloudy and the string-like material was dissolved.

Δ: The boiling water became slightly cloudy but the string-like material retained its shape. Texture was somewhat sticky and doughy.

o: The boiling water did not become cloudy and the string-like material completely retained its shape. Texture was very elastic.

The results are shown in Table 2, wherein the heating times at 90°C and 120°C are those after reaching the temperatures.

### Table 2

| Heating Temp (°C) | Heating Time (min) | | | | |
|---|---|---|---|---|---|
| | 3 | 5 | 15 | 30 | 60 |
| 60 | x | x | x | x | x |
| 70 | x | Δ | o | o | o |
| 90 | Δ | o | o | o | o |
| 121 | o | o | o | o | o |

As is seen from these results, it is necessary to heat at $70^{\circ}C$ for 5 minutes or more to achieve desired heat resistance/shape retention properties.

### Test 4

### The ratio of casein to acidic polysaccharide

To each of six 200 ml beakers were added 50 ml portions of warm water and to which was added 5 mg, 10 mg, 50 mg, 500 mg, 2 g or 2.2 g of ι-carrageenin, respectively,

and the beakers heated with stirring to effect solution. Separately, a solution containing casein was prepared by adding 100 g of casein to 400 ml of warm water, adding 5 ml of 28 % aqueous ammonia and stirring. 50 g Aliquots of this solution were placed in the said beakers and each was completely stirred and then adjusted pH to 8.0 with sodium hydroxide and heated at 80 °C for 15 minutes. The resulting solution was intermittently added dropwise to 10 % calcium chloride with a pipette to form a sphere-shaped material. The sphere-shaped material was placed in boiling water for 5 minutes and the degree of cloudiness and texture were evaluated based on the following criteria:

Degree of cloudiness:

x: The boiling water completely became cloudy.

Δ: The boiling water became somewhat cloudy.

o: The boiling water did not become cloudy.

Texture:

x: The texture was not uniform and contained extremely hard portions and a liquid portion.

Δ: Doughy texture.

o: Very elastic and like fish flesh sausage.

The results are shown in Table 3.

### Table 3

| Amount of Carrageenin (wt% based on casein) | Degree of Cloudiness | Texture |
|---|---|---|
| 0.05 | x | Dissolved |
| 0.1 | Δ | Δ |
| 0.5 | o | o |
| 5 | o | o |
| 20 | o | o |
| 22 | Δ | x |

As can be seen from the above results, 0.5 - 20 parts of the acidic polysaccharide per 100 parts of casein is used when it is desired to impart heat resistance/shape retention.

Having considered heat resistance and processability, the results of tests for the relation between heat treatment conditions and resistance to acids and bases are illustrated hereinafter.

Test 5.

#### Effect of addition of acidic polysaccharide

300 ml Portions of warm water were placed in six 1 liter beakers (A - F). To each beaker was added 0 g, 0.4 g, 0.5 g, 5 g, 30 g or 31 g of carrageenin, respectively and the mixture was heated at 80°C to effect solution. 100 g of sein was added to each beaker, dispersed and then dissolved by addition of 80 ml of 1 N aqueous sodium hydroxide. Each solution thus obtained was heated to 80°C and maintained at this temperature for 15 minutes after which each solution was immediately cooled to 50°C. By

- 16 -

0174192

using a sample of each solution, the following tests for resistance to acids and bases were carried out.

Test 5-A

Test for resistance to acids

10 g Sample of each solution was dissolved in 90 ml of warm water and the pH thereof was lowered to 5.0 by addition of 1 % solution of acetic acid. The solution was autoclaved at 121°C for 1 minute. Then, it was centrifuged at 1000 r.p.m. for 5 minutes and the volume of precipitate formed (ml/50 ml) was measured. Separately, 1 % solution of acetic acid was added to the autoclaved solution until the volume of precipitate formed by centrifugation under the same conditions became 1.0 ml/50 ml and the pH of the resulting mixture was measured.

Test 5-B

Test for resistance to bases

By using each sample, a cream of the following formulation was produced according to a conventional manner.

| Ingredient | Amount |
| --- | --- |
| Sample | 200 g |
| Lard | 180 g |
| Starch syrup powder | 150 g |
| Water | 470 ml |

Homogenization at 70°C under 200 $kg/cm^2$

15 ml Portions of the cream thus-produced were dispersed in 100 ml portions of 3 % and 10 % sodium chloride solutions, respectively and allowed to stand overnight.

Aggregation of the cream was estimated with the naked eye according to the following criteria.

++ : Complete aggregation, separation into upper and lower layers

+ : aggregation observed

± : slight aggregation observed

- : no aggregation

The results of Tests 5-A and 5-B are shown in Table 4.

## Table 4

| Sample | Carrageenin | Test 1-A | | Test 1-B | |
|--------|-------------|----------|--|----------|--|
| | parts per 100 parts casein | ml/50ml | pH at 1ml/50ml | NaCl 3 % | NaCl 10 % |
| A | 0 | 1.5 | 4.8 | + | ++ |
| B | 0.4 | 0.8 | 4.5 | ± | + |
| C | 0.5 | 0.2 | 4.2 | - | ± |
| D | 5 | 0.1 | 3.5 | - | - |
| E | 30 | 0.5 | 4.3 | - | ± |
| F | 31 | 1.0 | 4.7 | + | + |

As is seen from Table 4, when the acidic polysaccharide is used in an amount of 0.5 to 30 parts per 100 parts of casein, milk protein having resistance to acids and bases is obtained.

## Test 6

## Effect of pH

4 Liters of warm water was placed in a 10 liter container, 50 g of carrageenin was added thereto and the mixture was heated at 80°C to effect solution. Then, 1 kg of sodium caseinate was added and stirred to obtain a solution at 60°C. The solution was divided into six equal portions and the pH of each portion was adjusted to 6.8, 7.2, 7.3, 8.2, 10.5 or 10.6 respectively with sodium hydroxide. Each solution was maintained at 80°C for 15 minutes and then cooled to 60°C. Each solution was subjected to the same test procedure as in Tests 5-A and 5-B to estimate its resistance to acids and bases. The results are shown in Table 5.

## Table 5

| pH | Resistance to acids | | Resistance to bases | |
|---|---|---|---|---|
| | ml/50ml | pH at 1ml/50ml | NaCl 3 % | NaCl 10 % |
| 6.8 | 1.0 | 5.0 | + | ++ |
| 7.2 | 0.7 | 4.5 | ± | + |
| 7.3 | 0.2 | 4.4 | − | − |
| 8.2 | 0.1 | 3.5 | − | − |
| 10.5 | 0.6 | 4.4 | − | ± |
| 10.6 | 1.4 | 4.8 | + | ++ |

As is seen from Table 5, when the heat treatment is carried out at pH of 7.3 - 10.5, resistance to acids and bases is provided.

Test 7

Effect of heating temperature and time

According to the same procedure as in Test 6, a carrageenin solution was prepared and casein was dissolved therein. At that time, the temperature of the solution was maintained at not more than 65°C. After adjusting pH to 8.0 with sodium hydroxide, each solution was heated at 68°C, 70°C, 80°C, 90°C or 120°C for 2 minutes, 3 minutes, 30 minutes or 60 minutes, respectively (in case of the 90°C and 120°C experiments, the heating time was that after reaching the temperature). Each solution was subjected to the above tests for resistance to acids and bases. The results are shown in Tables 6 and 7.

## Table 6

Resistance to acids (ml/50 ml)

| Heating Temp. (°C) | Heating Time (min) | | | |
|---|---|---|---|---|
| | 2 | 3 | 30 | 60 |
| 68 | 1.3 | 0.8 | 0.7 | 0.7 |
| 70 | 1.2 | 0.4 | 0.2 | 0.1 |
| 80 | 1.0 | 0.2 | 0.1 | 0.05 |
| 90 | 0.6* | 0.2 | 0.05 | 0.05 |
| 120 | 0.2* | 0.1 | 0.05 | 0.05 |

* : In the case of 90°C and 120°C, the heat treatment at 70°C for more than 3 minutes has been already effected during elevation of the temperature.

## Table 7

### Resistance to bases

| Heating Temp. (°C) | Heating Time (min) | | | | | | | |
|---|---|---|---|---|---|---|---|---|
| | 2 | | 3 | | 30 | | 60 | |
| | NaCl 3% | 10% | NaCl 3% | 10% | NaCl 3% | 10% | NaCl 3% | 10% |
| 68 | + | ++ | + | ++ | + | ++ | + | ++ |
| 70 | + | ++ | – | ± | – | – | – | – |
| 80 | ± | ± | – | – | – | – | – | – |
| 90 | –* | ± | – | – | – | – | – | – |
| 120 | –* | –* | – | – | – | – | – | – |

* In the case of 90°C and 120°C, the heat treatment at 70°C for more than 3 minutes has been effected during elevation of temperature.

As is seen from Tables 6 and 7, resistance to acids and bases is provided by the heat treatment at least at 70°C for 3 minutes.

### Test 8

### Effect of calcium ion

A solution (pH 8.0) composed of 10 kg of casein, 0.5 kg of carrageenin, 40 kg of warm water and 0.33 kg of sodium hydroxide was divided into seven equal portions. Calcium chloride was added to each portion of the solution in such an amount so as to provide 0, 0.35, 0.37, 2.5, 5.1, 5.2 or 8.0% by weight based on casein respectively. Each solution was heated at 80°C for 15 minutes and then immediately cooled. The cooled solution was appropriately diluted and spray-dried. 100 g of each powder thus obtained was dissolved in 400 ml of warm water or a 5% aqueous solution of sodium chloride and distributed into 50 ml beakers. They were cooled to 5°C. The gel strength thereof was measured by using a rheometer (using 10 samples for each solution; measured at 5°C; using a plunger having 10 mm diameter; rate of 5 cm/min.). The gel strength corresponding to the stress when the plunger reached 1 cm depth. The results are shown in Table 8.

Table 8

| $CaCl \cdot 2H_2O$ | | Gel strength $(g/cm^2)$ | |
|---|---|---|---|
| % | Parts per 100 parts** casein | Warm water | 5 % NaCl |
| 0 | - | 125 | 225 |
| 0.35 | | 127 | 230 |
| 0.37 | 0.1 | 171 | 318 |
| 2.5 | | 191 | 764 |
| 5.1 | | 183 | 325 |
| 5.2 | 1.4 | 115 | 240 |
| 8.0 | | 91 | 121 |
| Control* | | 70 | 60 |

* : Sodium caseinate solution

** : Calculated as calcium ion

As is seen from Table 8, when calcium ion is added in an amount up to 1.4 parts by weight per 100 parts of casein, the thickening activity is improved.

The milk protein obtained by the process of the present invention and which has acid-and base-resistance can be used as a raw material or an additive in acidic foods because it is resistant to acids. Thus, for example, it can be used as an emulsifier for e.g. sour cream or dressings. Furthermore, since the milk protein obtained by the process of the present invention can produce high viscosity in the presence of calcium ion or magnesium ion without salting-out even under a high concentration of sodium chloride, it can be used as a raw material or an additive in food containing a large of a salt. Thus, or example, it can be used as a thickening agent for a sauce or an emulsifyer or gelling agent for ham and sausage containing sodium chloride in concentration as high as 3 to 5%. In addition, it is possible to develop new food products by utilizing the novel properties of the milk protein of the present invention.

The following Examples further illustrate the present invention in detail but are not to be construed as limiting the scope thereof.

Example 1

5 kg of  ∫ -Carrageenin was added to and dissolved in 350 litres of warm water to which was added 100 kg of casein. 72 litres of 1 N aqueous sodium hydroxide was added to the resulting mixture to dissolve the casein. The pH of the solution was 8.1. The solution was maintained at 80°C for

30 minutes, and then it was spray-dried to give 93 kg of the desired milk protein powder.

According to a conventional method, a cream of the following formulation was produced by using the resulting milk protein powder.

| Ingredient | Amount |
|---|---|
| Lard | 350 g |
| The above-obtained milk protein powder | 50 g |
| Starch syrup powder | 100 g |
| Water | 650 g |
| Homogenizer pressure | 150 kg/cm$^2$ |

10 ml of The cream was added to 100 ml of 10 % aqueous solution of sodium chloride. After dispersion, it was distributed into tubes. Each tube was heated to 90°C and the aggregation of lard was estimated. However, aggregation of lard was not observed. No denaturation of the protein due to sodium chloride was observed either. Furthermore, when the heated dispersion was diluted 50 times with water and the emulsion was subjected to microscopic observation, no aggregation of fat spheres was observed and uniform dispersion of fat spheres having diameter of 1 - 3 microns was observed.

Example 2

1 g of Xanthan gum was dissolved in warm water(900 ml) to which was added 100 g of sodium caseinate and 2 g of sodium tripolyphasphate to effect solution. The pH was 7.5. The resulting solution was heated to 75°C and maintained at this temperature for 5 minutes. Then, the solution was cooled to room temperature to obtain the desired milk protein solution.

According to conventional method, a sour cream of the following formulation was produced by using the resulting solution.

| Ingredient | Amount |
|---|---|
| Milk protein solution | 600 g |
| Butter oil | 800 g |
| Lactose | 100 g |
| Water | 480 g |
| Polyglycerin fatty acid ester | 20 g |
| Yeast extract | 0,5 g |

After pre-homogenizing the mixture of these ingredients the mixture was pasteurized at 80°C for 5 minutes, homogenized at 50 kg/cm$^2$ and then placed in a sterilized closed container. After cooling, 1 % of a starter of lactic acid bacteria (Lactobacillus bulgaricus) was added and the mixture was subjected to lactic acid fermentation at 37°C for 10 hours. When the fermentation mixture reached to pH 4.5, fermentation was ceased by heating to 80°C and the mixture was homogenized at 45 kg/cm$^2$ and cooled to below 10°C. The sour cream thus-obtained was at pH 4.4 and no aggregation of protein was observed. It was in a good emulsified state and showed excellent form retention.

Example 3

0.3 g of Xanthan gum and 1.7 g of ⊀-carrageenin was added to 370 ml of warm water and the resulting mixture was heated at 80°C to effect solution, after which 2.0 g of calcium chloride dihydrate was added and dissolved. 100 g of casein was dispersed in the solution and 30 ml of 10 % aqueous sodium hydroxide was added to dissolve casein. The pH of the solution was 7.6. The solution was heated at 80°C for 30 minutes. Then, the solution was divided into two equal portions and sodium chloride was dissolved in one portion in such an amount that the concentration thereof became 5 %. Each portion of the solution was cooled to 5°C and the gel strength thereof was measured by using a rheometer. Further, the same procedure was repeated except that calcium chloride was not added and the gel strength of each portion was measured. In addition, as a control, the same procedure was repeated using a sodium caseinate solution of the same concentration. The results are shown in Table 9 .

Table 9

| Milk protein solution | Gel strength $(g/cm^2)$ | |
|---|---|---|
| | with NaCl | without NaCl |
| Present invention (+ CaCl$_2$) | 680 | 189 |
| Present invention (without CaCl$_2$) | 218 | 121 |
| Control | 60 | 70 |

As is seen form Table 9 , the milk protein solution of the present invention shows a high gel strength even in the presence of sodium chloride. In particular, when calcium ion is present, a higher gel strength is obtained.

Example 4

To 900 ml of warm water was added 3 g of sodium alginate and 30 g of sodium caseinate to effect solution. 5 g of Sodium tripolyphasphate was added to this solution and reacted by heating at 90°C for 5 minutes to obtain the desired milk protein solution. The pH thereof was 8.1.

A coffee whitener was produced by adding 240 g of coconut oil (melting point: 32°C), 330 g of Pinedex (starch hydrolysate) and then 10 g of polyglycerin fatty acid ester to the milk protein solution thus-obtained and homogenizing the mixture at 150 kg/cm$^2$. The coffee whitener was added to coffee (pH 5.0) in such a ratio that 15 ml thereof was contained per 250 ml of coffee and the mixture was filled in cans. The cans were sterilized by autoclaving at 121°C for 30 minutes. Next morning, the cans were opened and the contents thereof were tested. As the result, the coffee whitener was uniformly dispersed in coffee and no aggregation of protein and separation of oil were observed.

Reference Example 1

The same procedure as in Example 1 was repeated except that the amount of $\iota$-carrageenin was decreased to 0.2 kg or the heat treatment was carried out at pH 7.0 to obtain respective milk protein powders. According to the same procedure as in Example 1, a cream was produced by using each milk protein powder thus-obtained. When each cream obtained was added to 10 % aqueous sodium chloride solution and heated, fat was aggregated at 40°C and the cream was separated into an aqueous layer and an oil layer by further elevation of the temperature. In addition, when the emulsion without heating was subjected to microscopic observation, aggregation of fat spheres was observed.

Reference Example 2

The same procedure as in Example 2 was repeated except that the amount of xanthan gum was decreased to 0.3 g, the heat treatment was carried out at pH 7.0 or the heat treatment was carried out at 65°C to obtain respective milk protein solutions.

According to the same procedure as in Example 2, the production of a sour cream was tried using each milk protein solution thus-obtained. However, it was very difficult to obtain a cream-like state due to aggregation of protein.

Example 5

0.5 g of ι-Carrageenin was added to and dissolved in 90 ml of warm water to which was added 10 g of sodium caseinate and the resulting solution was stirred to prepare a solution containing casein and carrageenin. To the solution was added 10 ml of 20 % aqueous tripolyphosphoric acid to adjust pH to 8.3. The solution was heated at 80 °C for 30 minutes, and was extruded through a stainless tube having an inner diameter of 0.5 mm into 5 % aqueous calcium chloride solution and soaked in the calcium chloride solution for 10 minutes. Then, the soaked product was taken out to give 80 g of a desired string-like milk protein of about 0.7 mm diameter.

The above string-like milk protein retained its shape even after it was boiled in boiling water for 30 minutes and, in addition, it remained very elastic; and the boiling water did not become cloudy.

Example 6

2 kg of Casein was dispersed in 8 L of warm water to which was added 100 ml of 28 % aqueous ammonia to dissolve the casein. Then, 100 of 4 % aqueous sodium alginate was added to the solution and pH was adjusted to 7.7 with 30 ml of 10 N sodium hydroxide to prepare a solution containing casein and sodium alginate. The resulting solution was heated at 73 °C for 10 minutes. After heating, 20 g of polyglycerin stearate (average polymerization degree of glycerin being 7) was added and the mixture was completely stirred and extruded through a slit of 0.2 x 50 mm into 100 ml of 10 % aqueous calcium chloride to give 9.9 kg of a desired membrane-shaped milk protein of 0.2 mm thick and 55 mm wide.

After washed with water, the product was boiled in boiling water for 30 minutes, but there was no change in its shape and the boiling water did not become cloudy. The texture of the product after boiling was like sliced boiled beef.

Example 7

23 g of Furcellaran was added to 350 g of warm water and the resulting mixture was stirred to effect solution, after which was added 150 g of sodium caseinate which was dissolved to prepare a solution containing casein and furcellaran. The solution was adjusted to pH 10.0 with 5N sodium hydroxide and heated and treated in an autoclave at 121°C for 15 minutes. Then, the product was intermittently extruded through a cylinder of 5 mm diameter to give a desired sphere-shaped milk protein of 5 mm diameter.

The product did not change its shape after being boiled in boiling water for 30 minutes, and further the boiling water did not become cloudy. The texture was like white meat of chicken.

Example 8

0.5 g of κ-Carrageenin was added to 400 g of warm water and dissolved. Then, 100 g of sodium caseinate was added to the mixture and stirred to effect solution. 170 ml of 10 % Aqueous sodium polyphosphate was added to the mixture to adjust pH to 8.0 and the mixture was heated at 80 °C for 30 minutes. After heating, 100 g of hydrogenated soybean oil, 2 g of a sucrose fatty acid ester, and a small amount of a yellow coloring agent and a flavor were added to the mixture which was subject to homogenization at a pressure of 150 kg/cm² and extruded from a 0.2 x 50 mm slit into 5 % aqueous calcium chloride to give 650 g of a desired membrane-shaped milk protein.

When the product was boiled in boiling water, there were no separation of the coloring agent and oil and no change in product shape. The milk protein showed an appearance and texture similar to Yuba (skin of boiled soy milk).

Example 9

To 400 ml of warm water was added 7 ml of 28 % aqueous ammonia and further slowly added a mixture of 100 g of casein and 10 g of carrageenin with stirring to effect solution to obtain a solution of pH 8.5 containing casein and carrageenin. This solution was heated at 80°C for 30 minutes and mixed with 50 g of beef paste, a small amount of beef flavor and 50 g of lard dissolved by heating, and the mixture was thoroughly mixed. The mixture was placed in a refrigerator overnight to gel and cut into appropriate size and soaked in 3 % aqueous calcium chloride for 30 minutes to give a desired block-shaped milk protein.

After the products were boiled in boiling water for 30 minutes, a part of oil and beef paste which were not fully emulsified were separated, but there was no other change. The texture of the products were similar to roast.

## CLAIMS

1. A process for preparing a milk protein resistant to acids and bases which comprises subjecting an aqueous solution or dispersion containing casein and 0.5 - 30 parts by weight of an acidic polysaccharide per 100 parts of casein to heat treatment at pH 7.3 - 10.5 and at a temperature of $70^{\circ}C$ or higher for 3 minutes or more..

2. A process as claimed in claim 1, wherein the acidic polysaccharide is one or more of alginic acid, sodium alginate, propylene alginate, carrageenin, furcellaran, gum karaya, gum ghatti, gum tragacanth, xanthan gum, methly cellulose, carboxy methyl cellulose or low-methoxyl pectin.

3. A process as claimed in claim 1 or claim 2, wherein the heat treatment is carried out in the presence of 0.1 - 1.4 parts by weight of calcium ion or magensium ion per 100 parts by weight of casein.

4. A process as claimed in claim 3, wherein the calcuim or magnesium ion is provided by calcium chloride, calcium phosphate, calcium carbonate, calcium sulfate, calcium lactate, calcium hydroxide, magnesium chloride, magnesium sulfate, magnesium citrate or magnesium lactate.

5. A process as claimed in anyone of claims 1 to 4 wherein the heat treatment is carried out at 70 to 130 $^{\circ}C$ for up to 90 minutes.

6. A process as claimed in claim 1 and adapted to prepare a heat resistant milk protein having excellent processability, which process comprises subjecting an aqueous solution or dispersion containing casein and an acidic polysaccharide, the polysaccharide being present in an amount of 0.5-20 parts by weight per 100 parts of casein, to heat treatment at a pH of 7.5-10.5 and a temperature of $70^{\circ}C$ or higher for 5 minutes or more, forming the resultant material into a desired shape, and then soaking the thus-shaped material in an aqueous solution containing a multivalent metallic compound in an amount of 10 mM or more as multivalent metal.

7. A process as claimed in claim 6, wherein the acidic polysaccharide comprises alginic acid, sodium alginate, propylene alginate, carrageenin or furcellaran.

8. A process as claimed in claim 6 or claim 7, wherein the multivalent metallic compound comprises calcium sulfate, calcium phosphate, calcium carbonate, calcium lactate, calcium hydroxide, magnesium chloride, magnesium sulfate, magnesium citrate, magnesium lactate or magnesium hydroxide.

9. A process as claimed in any one of claims 6 to 8, wherein a polyglycerin fatty acid ester is added to the resultant material from the heat treatment.

10. A process as claimed in any one of claims 6 to 9, wherein the heat treatment is carried out at 70 to $130^{\circ}C$ for 5 to 90 minutes.

11. A process as claimed in any one of claims 6 to 10, wherein the amount of the multivalent metallic compound is 70 to 1500 mM as multivalent metal.

12. A process for preparing a milk protein exhibiting heat resistance and having excellent processability which process comprises subjecting a casein solution or dispersion as defined in claim 1 wherein the amount of the polysaccharide is from 0.5 to 20 parts by weight per 100 parts of casein to a heat treatment as defined in claim 1 wherein the duration is at least 5 minutes and the pH is 7.5 - 10.5, forming the resultant material into a desired shape, and then soaking the thus-shaped material in an aqueous solution containing a multivalent metallic compound in an amount of 10 mM or more as multivalent metal.

13. A food product or additive which comprises a milk protein which has been produced by a process as claimed in any one of claims 1 to 12.